# FASCICULE DE BREVET EUROPEEN

(11) **EP 3 558 717 B1**
(45) Date de publication et mention de la délivrance du brevet: **18.11.2020**
(21) Numéro de dépôt: 17828956.7
(22) Date de dépôt: 18.12.2017
(51) Int. Cl.: B60C 11/03, B60C 11/04, B60C 11/24

(54) **INDICATEUR D'USURE DE BANDE DE ROULEMENT DE PNEUMATIQUE POUR AVION**
FLUGZEUGREIFENLAUFFLÄCHENVERSCHLEISSANZEIGER
AEROPLANE TYRE TREAD WEAR INDICATOR

(30) Priorité: 20.12.2016 FR 1662816
(43) Date de publication de la demande: 30.10.2019
(73) Titulaire: Compagnie Générale des Etablissements Michelin, 63000 Clermont-Ferrand (FR)
(72) Inventeur: FRANCOIS, Olivier, 63040 Clermont Ferrand Cedex 9 (FR)
(74) Mandataire: Millanvois, Patrick Jacques Jean
(86) Numéro de dépôt international: PCT/FR2017/053641
(87) Numéro de publication internationale: WO 2018/115674

(56) Documents cités:
- EP-A2- 0 250 113
- EP-A2- 1 524 131
- FR-A1- 2 917 668
- US-A1- 2006 124 214

## Description

La présente invention a pour objet un pneumatique pour avion, plus particulièrement sa bande de roulement et, encore plus particulièrement, un indicateur d'usure de la bande de roulement.

Il est connu que la bande de roulement d'un pneumatique, destinée à venir en contact avec le sol par l'intermédiaire d'une surface de roulement, est la partie usante du pneumatique, c'est-à-dire qu'elle subit une diminution d'épaisseur résultant du roulage du pneumatique. La bande de roulement est généralement constituée d'éléments en relief séparés les uns des autres par des creux, cette combinaison constituant ce qu'on appelle communément une sculpture. Dans le cas d'un pneumatique pour avion, les éléments en relief sont le plus souvent des nervures circonférentielles, continues sur toute la circonférence du pneumatique et séparées entre elles par des creux appelés rainures circonférentielles. L'usure a pour effet de diminuer la hauteur des nervures circonférentielles et, corrélativement, la profondeur des rainures circonférentielles, dégradant ainsi la performance du pneumatique. L'usure d'une nervure circonférentielle, à un instant donné de la vie du pneumatique, est généralement quantifiée par un taux d'usure. Le taux d'usure est égal au rapport (Ho-H)/Ho, où Ho et H sont respectivement la hauteur initiale Ho de la nervure circonférentielle, mesurée sur le pneumatique neuf, et la hauteur résiduelle H de la nervure circonférentielle, mesurée sur le pneumatique usé.

Concernant le domaine spécifique des pneumatiques pour avion, l'homme du métier a mis en évidence deux types d'usure selon la phase d'utilisation du pneumatique. A l'atterrissage, la partie médiane de la bande de roulement, dont la largeur axiale est au moins égale à 50% et au plus égale à 80% de la largeur axiale totale de la bande de roulement, est soumise, au moment de l'entrée en contact de la surface de roulement avec le sol, à une usure appelée « usure toucher », résultant d'une importante abrasion et d'un échauffement thermique élevé, du fait du différentiel de vitesses entre la vitesse de rotation du pneumatique et la vitesse de l'avion. En phase de roulage au sol ou « phase taxi », avant le décollage ou après l'atterrissage de l'avion, les parties latérales de la bande roulement, positionnées axialement de part et d'autre de la partie médiane et dont les largeurs axiales respectives sont au moins égales à 10% et au plus égales à 25% de la largeur axiale totale de la bande de roulement, sont soumises à une usure appelée « usure taxi », résultant des efforts freineurs exercés sur ces parties latérales du fait de leur vitesse de rotation supérieure à celle de la partie médiane. Ainsi la bande de roulement est principalement usée au niveau de sa partie médiane, à l'atterrissage, et au niveau de ses parties latérales, en phase taxi.

L'usage précédemment décrit entraîne souvent la présence d'une usure non uniforme de la bande de roulement, appelée usure irrégulière, résultant des sollicitations au cours des différentes phases d'utilisation du pneumatique: décollage, roulage et atterrissage. Il a été plus particulièrement mis en évidence une usure différentielle de la bande roulement entre la partie médiane et les deux parties latérales de la bande de roulement, l'usure de cette partie médiane étant généralement la plus importante. L'usure différentielle de la partie médiane de la bande de roulement entraîne une limitation de la durée de vie du pneumatique, donc de son utilisation et son retrait prématuré, bien que la bande de roulement ne présente généralement qu'une relativement faible usure des parties latérales de la bande de roulement : ce qui est pénalisant sur le plan économique.

En pratique, un pneumatique pour avion est déposé lorsque le taux d'usure d'une ou plusieurs nervures circonférentielles de la bande de roulement atteint une valeur maximale admissible, généralement prise en référence comme base 100, et le pneumatique usé est alors remplacé.

Une difficulté connue de tout exploitant de pneumatiques pour avion est de prévoir, de façon fiable, le remplacement des pneumatiques usés et de programmer les opérations de maintenance correspondantes. Une mauvaise programmation des opérations de maintenance peut en effet causer des immobilisations intempestives de l'avion engageant des coûts supplémentaires d'exploitation pour l'utilisateur. Pour éviter ces immobilisations, un stockage de pneumatiques de remplacement est souvent réalisé, sur chacun des aéroports fréquentés par l'exploitant de flotte d'avions, pour pouvoir réaliser des remplacements de pneumatiques, à tout moment, ce qui est pénalisant d'un point de vue économique.

La programmation des opérations de remplacement de pneumatiques est complexe, en raison, en particulier, de la difficulté de prévision de l'usure d'un pneumatique pour avion. En effet l'épaisseur résiduelle de la bande roulement en fonction du nombre d'atterrissages réalisés, qui caractérise la vitesse d'usure de la bande de roulement et plus spécifiquement la vitesse d'usure toucher, ne varie pas linéairement. Le potentiel d'usure restant, mesurant le nombre d'atterrissages résiduels pouvant être réalisés avant usure complète, ne peut pas être déterminé pas une simple mesure la hauteur résiduelle des nervures circonférentielles de la bande de roulement. A titre d'exemple, les inventeurs ont pu, dans un cas particulier, montrer qu'une bande de roulement, permettant théoriquement de réaliser 400 atterrissages jusqu'à usure complète, correspondant à un taux d'usure de 100%, permettait en réalité de réaliser 160 atterrissages, correspondant à 40% du nombre prévisionnel total d'atterrissages, avec un taux d'usure de 75%. En d'autres termes, l'évolution du taux d'usure en fonction du nombre d'atterrissages n'est pas linéaire.

En pratique, les hauteurs respectivement initiale Ho et résiduelle H d'une nervure circonférentielle sont souvent déterminées par une mesure directe de la profondeur correspondante de la rainure circonférentielle adjacente, à l'aide d'un outil de mesure adapté, ce qui présente l'inconvénient de conférer une certaine lourdeur au suivi de l'usure.

Le taux d'usure de la bande de roulement peut également être déterminé à l'aide d'indicateurs d'usure, appelés aussi témoins d'usure. Classiquement, ces indicateurs d'usure peuvent être de deux types : des indicateurs d'usure en relief par rapport à un fond de rainure circonférentielle et des indicateurs d'usure positionnés dans l'épaisseur des nervures circonférentielles.

Un indicateur d'usure, constitué par un élément en relief par rapport à un fond de rainure circonférentielle, a généralement une hauteur sensiblement inférieure à la hauteur initiale de la nervure circonférentielle. Lorsque la hauteur résiduelle de la nervure circonférentielle, adjacente à la rainure comprenant l'indicateur d'usure, atteint une valeur minimale admissible, correspondant au niveau supérieur de l'indicateur d'usure, le taux d'usure maximal admissible est atteint et déclenche le remplacement du pneumatique. Un tel indicateur d'usure ne permet pas toutefois de quantifier l'évolution progressive de l'usure de la bande de roulement au cours de l'usage : il indique simplement que le taux d'usure maximal admissible est atteint.

Il a été également proposé de positionner des indicateurs d'usure dans l'épaisseur des nervures circonférentielles, de telle sorte que la trace de ces indicateurs d'usure sur la surface de roulement puisse alerter visuellement que la hauteur minimale admissible des nervures circonférentielles, définissant le taux d'usure maximal admissible de la nervure circonférentielle, était atteinte.

Un premier type d'indicateur d'usure positionné dans les nervures circonférentielles est constitué par des éléments caoutchouteux, dont la composition caoutchouteuse est de couleur non noire. A titre d'exemple, le document FR 1480472 prévoit une bande de roulement incorporant des matériaux en couleur, contrastant avec la couleur noire du pneumatique, qui apparaissent quand a été atteinte la limite d'usure admissible. L'utilisation de compositions caoutchouteuses de couleur a cependant un certain nombre d'inconvénients, notamment au niveau de la complexité et du coût du procédé de fabrication. Leur positionnement précis dans la bande de roulement est par ailleurs difficile à assurer. De plus, des inserts de compositions caoutchouteuses de couleur peuvent constituer des zones d'usure irrégulière. Enfin, ce type d'indicateur d'usure ne permet pas de quantifier l'évolution progressive de l'usure de la bande de roulement au cours de l'usage.

Un second type d'indicateur d'usure positionné dans les nervures circonférentielles est constitué par des sillons ou des cavités creusés dans les nervures circonférentielles, ou, plus généralement, dans les éléments en relief de la bande de roulement. La trace de ces indicateurs d'usure sur la surface de roulement est caractérisée par un contraste optique entre la composition caoutchouteuse formant la bande de roulement et les sillons ou cavités formés dans cette même bande de roulement.

Pour illustrer un premier exemple de ce second type d'indicateur d'usure, le document EP 0250113A2 décrit des indicateurs d'usure, constitués par des groupes de sillons de profondeurs différentes, de telle sorte que les traces des sillons sur la surface de roulement disparaissent à différents taux d'usure. La détection visuelle de ces sillons peut toutefois être malaisée du fait de la faible épaisseur de ces sillons et de l'absence de contraste entre les sillons et le reste de la bande de roulement.

Comme illustration d'un second exemple du second type d'indicateur d'usure, les documents EP 1705034B1 et WO 2010012735A1 décrivent une bande de roulement comportant une surface de roulement et au moins un indicateur d'usure formé par au moins une cavité débouchant sur la surface de roulement, la trace de la cavité sur la surface de roulement comprenant une surface portante et une pluralité de parties connectées à une surface portante et faisant saillie sur la surface portante, le nombre des parties faisant saillie étant une fonction du taux d'usure de la bande de roulement, la forme géométrique et l'aire de la trace de la cavité sur la surface de roulement étant modifiées en fonction du taux d'usure de la bande de roulement, la forme géométrique de ladite trace étant une expression analogique du taux d'usure de la bande de roulement. Par « expression analogique » du taux d'usure de la bande de roulement on entend une forme de la trace de l'indicateur d'usure permettant d'exprimer à elle seule et directement le taux d'usure, sans qu'il soit indispensable d'introduire une autre référence. Les formes de ces indicateurs d'usure sont relativement complexes et, dans l'hypothèse d'une fabrication par moulage de ces indicateurs d'usure, lors de la cuisson du pneumatique, les éléments de moulage correspondants sont par conséquent relativement complexes.

Enfin, selon un troisième exemple du second type d'indicateur d'usure, le document US 9355346B2 décrit un indicateur d'usure de bande de roulement dont l'apparence change en fonction de l'usure. L'indicateur d'usure contient ainsi un motif multidimensionnel, disposé dans la bande de roulement, de telle sorte que différents niveaux du motif sont exposés en fonction de l'usure. Comme dans l'exemple précédent, la complexité de forme d'un tel motif multidimensionnel implique une relative complexité de fabrication.

Les inventeurs se sont donnés pour objectif de déterminer le taux d'usure d'une bande de roulement d'un pneumatique pour avion, à l'aide d'indicateurs d'usure positionnés dans les nervures circonférentielles de la bande de roulement, lesdits indicateurs d'usure étant simples à fabriquer et permettant une lecture directe et fiable du taux d'usure, au cours de la vie du pneumatique.

Cet objectif a été atteint par un pneumatique pour avion comprenant une bande de roulement, destinée à venir en contact avec un sol par l'intermédiaire d'une surface de roulement:
- la bande de roulement comprenant au moins trois nervures circonférentielles axialement séparées les unes des autres par au moins un sillon circonférentiel,
- au moins une nervure circonférentielle ayant une hauteur initiale H0, mesurée sur le pneumatique à l'état neuf, et étant destinée à être usée jusqu'à une hauteur résiduelle admissible HR,
- la au moins une nervure circonférentielle comprenant au moins un indicateur d'usure,
- l'indicateur d'usure comprenant N cavités cylindriques débouchant sur la surface de roulement et indépendantes les unes par rapport aux autres,
- les N cavités de l'indicateur d'usure étant réparties en une première famille de N1 cavités d'usure C1ᵢ ayant des profondeurs initiales P1ᵢ respectives deux à deux distinctes et égales à i^{∗}(H0-HR)/N1, i étant un nombre entier variant de 1 à N1, et en une deuxième famille de N2 cavités de positionnement C2ⱼ, j étant un nombre entier variant de 1 à N2, chaque cavité de positionnement C2ⱼ ayant une profondeur initiale P2ⱼ strictement supérieure à (HO-HR), de telle sorte que seules les N2 cavités de positionnement C2ⱼ débouchent sur la surface de roulement lorsque la hauteur résiduelle admissible HR de la nervure circonférentielle est atteinte.

L'indicateur d'usure d'une nervure circonférentielle de la bande de roulement d'un pneumatique pour avion, selon l'invention, est constitué de N cavités cylindriques débouchant sur la surface de roulement, se décomposant, de façon essentielle, en deux familles distinctes respectivement de N1 cavités d'usure et de N2 cavités de positionnement.

La première famille, constituée de N1 cavités d'usure C1ᵢ, i étant un nombre entier variant de 1 à N1, est destinée à quantifier le taux d'usure de la nervure circonférentielle à tout instant de la vie du pneumatique. Chaque cavité d'usure C1ᵢ est un cylindre d'axe radial, perpendiculaire à l'axe de révolution du pneumatique, débouchant sur la surface de roulement et ayant une profondeur P1ᵢ égale à i^{∗}(H0-H)/N1. Par conséquent, une cavité d'usure C1ᵢ est apparente sur la surface de roulement, tant que la hauteur de la nervure circonférentielle est comprise entre sa valeur initiale H0 et une valeur résiduelle Hᵢ égale à HO-(i^{∗}(H0-HR)/N1), et disparaît en-deçà de cette valeur résiduelle Hᵢ. Le taux d'usure correspondant Uᵢ= (H0-Hᵢ)/Ho est alors égal à i^{∗}(1-HR/H0)/N1. Lorsque i est égal à N1, la hauteur résiduelle H_{N1} de la nervure circonférentielle est alors égale à HR, hauteur résiduelle minimale admissible vis-à-vis de l'usure, correspondant à un taux d'usure maximal admissible égal à 1-HR/H0. Il y a ainsi une disparition progressive des cavités d'usure C1ᵢ, lorsque i varie de 1 à N1.

La deuxième famille, constituée de N2 cavités de positionnement C2ⱼ, j étant un nombre entier variant de 1 à N2, est destinée à repérer le positionnement axial de l'indicateur d'usure, c'est-à-dire son positionnement dans la largeur axiale de la bande de roulement, la direction axiale étant, par convention, parallèle à l'axe de révolution du pneumatique. Chaque cavité de positionnement C2ⱼ est un cylindre d'axe radial, perpendiculaire à l'axe de révolution du pneumatique, débouchant sur la surface de roulement et ayant une profondeur P2ⱼ strictement supérieure à (HO-HR), de façon à rester débouchante, donc apparente, lorsque la hauteur résiduelle minimale admissible HR de la nervure circonférentielle est atteinte, c'est-à-dire lorsque les N1 cavités d'usure C1ᵢ de la première famille ont disparu. Dans le cas général il n'y a pas de relation particulière entre les profondeurs P2ⱼ respectives des cavités de positionnement C2ⱼ, mais celles-ci sont avantageusement égales entre elles pour simplifier la fabrication par moulage desdites cavités de positionnement.

Avantageusement le nombre N1 de cavités d'usure C1ᵢ est au moins égal à 1 et au plus égal à 10. Plus le nombre N1 est élevé, plus le nombre de taux d'usure intermédiaires entre le pneumatique neuf, correspondant à un taux d'usure nul, et le pneumatique totalement usé, correspondant à un taux d'usure maximal égal à 1-HO/HR, pouvant être déterminés, est élevé. Le nombre N1 conditionne ainsi la finesse du suivi de l'évolution du taux d'usure de la nervure circonférentielle, au cours de la vie du pneumatique.

Encore avantageusement le nombre N2 de cavités de positionnement C2ⱼ est au moins égal à 1 et au plus égal à 5. Le nombre N2 doit être suffisamment élevé pour permettre de repérer de façon différenciée l'indicateur d'usure selon qu'il est positionné dans une nervure circonférentielle de la portion médiane de la bande de roulement, appelée également nervure circonférentielle médiane, ou dans une nervure circonférentielle d'une portion médiane de la bande de roulement, appelée également nervure circonférentielle d'épaule.

Préférentiellement toute cavité a, sur la surface de roulement, une surface débouchante inscrite dans un cercle de diamètre D au moins égal à 2 mm et au plus égal à 10 mm. En-deçà de 2 mm, la surface débouchante de la cavité a un diamètre insuffisant, ne permettant pas une détection visuelle aisée et, le cas échéant, pouvant être sensible à une obstruction par des matières étrangères. Au-delà de 10 mm, la surface débouchante peut avoir un impact local sur l'usure de la nervure circonférentielle.

Selon un mode de réalisation préférentiel des cavités d'usure, toutes les cavités d'usure C1ᵢ ont, sur la surface de roulement, une surface débouchante inscrite dans un cercle de diamètre D1 identique. Un diamètre identique de surface débouchante permet d'identifier facilement l'appartenance des cavités d'usure à la même première famille et d'avoir, pour la fabrication, des pièces de moulage de même section, d'où un gain en standardisation.

Selon un mode de réalisation préférentiel des cavités de positionnement, toutes les cavités de positionnement C2ⱼ ont, sur la surface de roulement, une surface débouchante inscrite dans un cercle de diamètre D2 identique. Un diamètre identique de surface débouchante permet d'identifier facilement l'appartenance des cavités de positionnement à la même deuxième famille et d'avoir, pour la fabrication, des pièces de moulage de même section, d'où un gain en standardisation.

Avantageusement, les diamètres respectifs des cavités d'usure et de positionnement, identiques au sein d'une même famille, sont distincts d'une famille à l'autre. Cette différence permet de distinguer facilement l'appartenance d'une cavité donnée à l'une ou l'autre des deux familles.

Préférentiellement la bande de roulement comprend deux nervures circonférentielles d'épaule et une nervure circonférentielle médiane, comprenant chacune au moins un indicateur d'usure ayant le même nombre N1 de cavités d'usure C1ᵢ et un nombre N2 de cavités de positionnement C2ⱼ différent, de telle sorte que le nombre total N=N1+N2 de cavités est différent pour chacune des deux nervures circonférentielles d'épaule et la nervure circonférentielle médiane. Un nombre N2 de cavités de positionnement C2ⱼ, différent selon la nervure circonférentielle considérée, permet de bien identifier l'appartenance de l'indicateur d'usure à une nervure circonférentielle donnée et donc la zone de la bande de roulement dans laquelle est mesurée l'usure.

Encore plus préférentiellement la bande de roulement comprend deux nervures circonférentielles d'épaule et une nervure circonférentielle médiane, comprenant chacune au moins trois indicateurs d'usure, répartis sur la circonférence de la nervure circonférentielle, identiques entre eux pour chaque nervure circonférentielle, et ayant, d'une nervure circonférentielle à l'autre, le même nombre N1 de cavités d'usure C1ᵢ et un nombre N2 de cavités de positionnement C2ⱼ différent. Avantageusement, chaque nervure circonférentielle, dont on veut déterminer le taux d'usure au cours du temps, comprend au moins trois indicateurs d'usure, répartis sur la circonférence du pneumatique, de préférence avec une répartition équidistante. Cette répartition d'au moins trois indicateurs d'usure, pour une nervure circonférentielle donnée, permet de déterminer les taux d'usure locaux de ladite nervure circonférentielle, en divers points de la circonférence du pneumatique, et donc d'identifier d'éventuelles usures irrégulières sur la circonférence, et également de déterminer un taux d'usure moyen, correspondant à la moyenne des taux d'usure locaux relevés. Par ailleurs, comme précédemment, un nombre N2 de cavités de positionnement, différent selon la nervure circonférentielle concernée, permet de bien identifier l'appartenance de l'indicateur d'usure à une nervure circonférentielle donnée et donc la zone de la bande de roulement dans laquelle est mesurée l'usure.

Il est également avantageux que les au moins un indicateur d'usure respectifs des deux nervures circonférentielles d'épaule et de la nervure circonférentielle médiane soient positionnés circonférentiellement, les uns par aux autres, dans un secteur angulaire circonférentiel au plus égal à 20°. En effet, le fait d'avoir des indicateurs d'usure pour les diverses nervures circonférentielles, regroupés dans un secteur angulaire limité, facilite la capture de l'information visuelle relative à ces indicateurs d'usure.

Les caractéristiques de l'invention seront mieux comprises à l'aide des figures 1 à 6, non représentées à l'échelle :
- Figure 1: Vue en perspective partielle d'un pneumatique selon l'invention
- Figure 2: Coupe méridienne de la bande de roulement d'un pneumatique selon l'invention
- Figure 3: Vue en perspective d'un indicateur d'usure selon l'invention
- Figure 4: Vue de dessus d'un indicateur d'usure selon l'invention, à différents taux d'usure
- Figure 5A : Vue de dessus de 3 indicateurs d'usure, positionnés respectivement sur une nervure circonférentielle médiane et deux nervures circonférentielles d'épaule, pour un pneumatique à l'état neuf
- Figure 5B : Vue de dessus de 3 indicateurs d'usure, positionnés respectivement sur une nervure circonférentielle médiane et deux nervures circonférentielle d'épaule, pour un pneumatique totalement usé
- Figure 6 : Variation de la hauteur H d'une nervure circonférentielle en fonction du nombre d'atterrissages réalisés.

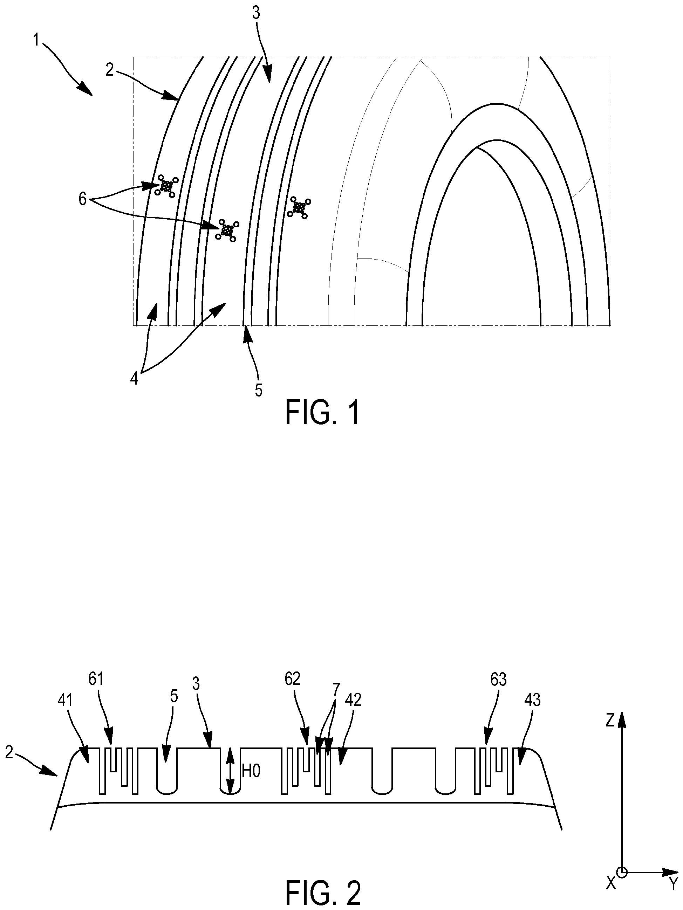

La figure 1 représente une vue en perspective partielle d'un pneumatique 1 pour avion comprenant une bande de roulement 2, destinée à venir en contact avec un sol par l'intermédiaire d'une surface de roulement 3. La bande de roulement 2 comprend cinq nervures circonférentielles 4 et quatre sillons circonférentiels 5 séparant deux à deux les nervures circonférentielles. Deux nervures circonférentielles d'épaule, axialement les plus extérieures, et la nervure circonférentielle médiane comprennent chacune un indicateur d'usure 6 comprenant des cavités cylindriques débouchant sur la surface de roulement 3 et indépendantes les unes par rapport aux autres.

La figure 2 représente une coupe méridienne d'une bande de roulement d'un pneumatique selon l'invention. La bande de roulement 2 comprend cinq nervures circonférentielles dont deux nervures circonférentielles d'épaule (41, 43) et une nervure circonférentielle médiane 42, comprenant chacune un indicateur d'usure (61, 62, 63). Chaque indicateur d'usure (61, 62, 63) comprend des cavités cylindriques 7 débouchant sur la surface de roulement 3 et indépendantes les unes par rapport aux autres. Chaque nervure circonférentielle (41, 42, 43) a une hauteur initiale H0, mesurée sur le pneumatique à l'état neuf, et est destinée à être usée jusqu'à une hauteur résiduelle admissible HR (non représentée).

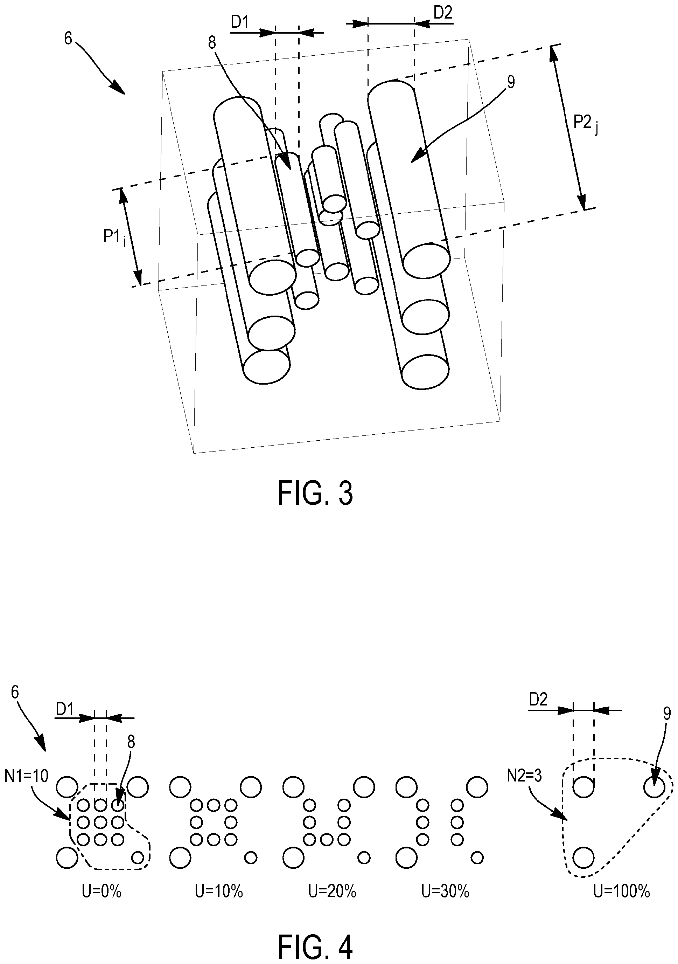

La figure 3 représente une vue en perspective d'un indicateur d'usure selon l'invention. L'indicateur d'usure 6 comprend une première famille de cavités d'usure 8, destinée à quantifier le taux d'usure de la nervure circonférentielle à tout instant de la vie du pneumatique, chaque cavité d'usure 8 étant un cylindre profondeur P1ᵢ ayant une surface débouchante inscrite dans un cercle de diamètre D1. L'indicateur d'usure 6 comprend une deuxième famille de cavités de positionnement 9, destinée à repérer le positionnement axial de l'indicateur d'usure, c'est-à-dire son positionnement dans la largeur axiale de la bande de roulement, chaque cavité d'usure 9 étant un cylindre profondeur P2ⱼ ayant une surface débouchante inscrite dans un cercle de diamètre D2.

La figure 4 représente une vue de dessus d'un indicateur d'usure selon l'invention, à différents taux d'usure. L'indicateur d'usure 6 comprend une première famille de N1=10 cavités d'usure 8 ayant une surface débouchante inscrite dans un cercle de diamètre D1 et une deuxième famille de N2=3 cavités de positionnement 9 ayant une surface débouchante inscrite dans un cercle de diamètre D2. L'indicateur d'usure est représenté à divers taux d'usure. Comme vu précédemment, le taux d'usure est, par définition, égal à U=1-H0/H, H0 étant la hauteur initiale de la nervure circonférentielle, sur pneumatique neuf, et H la hauteur de la nervure circonférentielle, sur pneumatique au moins partiellement usé. Sur le pneumatique neuf, le taux d'usure U est donc égal à 0%. Sur le pneumatique complètement usé, le taux d'usure U est égal à 1-HO/HR, HR étant la hauteur résiduelle admissible : par convention, ce taux d'usure maximale est pris égal à 100%. Un taux d'usure égal à 10% correspond à une hauteur de nervure circonférentielle égale à H= H0-0.1^{∗}(H0-HR) et, plus généralement, un taux d'usure égal à i% correspond à une hauteur de nervure circonférentielle égale à H= H0-(i/100)^{∗}(H0-HR). Pour un taux d'usure nul, l'indicateur d'usure 6 comprend dix cavités d'usure 8 et trois cavités de positionnement 9. Pour un taux d'usure égal à 10%, une première cavité d'usure C1₁, ayant une profondeur P1₁ égale à 0.1^{∗}(H0-HR), a été complètement usée et n'est plus apparente sur la surface de roulement : l'indicateur d'usure 6 comprend alors neuf cavités d'usure 8 et trois cavités de positionnement 9. Pour un taux d'usure égal à 20%, une deuxième cavité d'usure C1₂, ayant une profondeur P1₂ égale à 0.2^{∗}(H0-HR), a été complètement usée et n'est plus apparente sur la surface de roulement: l'indicateur d'usure 6 comprend alors huit cavités d'usure 8 et trois cavités de positionnement 9. Pour un taux d'usure égal à 30%, une troisième cavité d'usure C1₃, ayant une profondeur P1₃ égale à 0.3^{∗}(H0-HR), a été complètement usée et n'est plus apparente sur la surface de roulement: l'indicateur d'usure 6 comprend alors sept cavités d'usure 8 et trois cavités de positionnement 9. Enfin, pour un taux d'usure égal à 100%, toutes les cavités d'usure 8 de l'indicateur d'usure 6 ont été complètement usées : seules sont apparentes les trois cavités de positionnement 9 dont les profondeurs respectives P2ⱼ, j variant de 1 à 3, sont strictement supérieures à H0-HR.

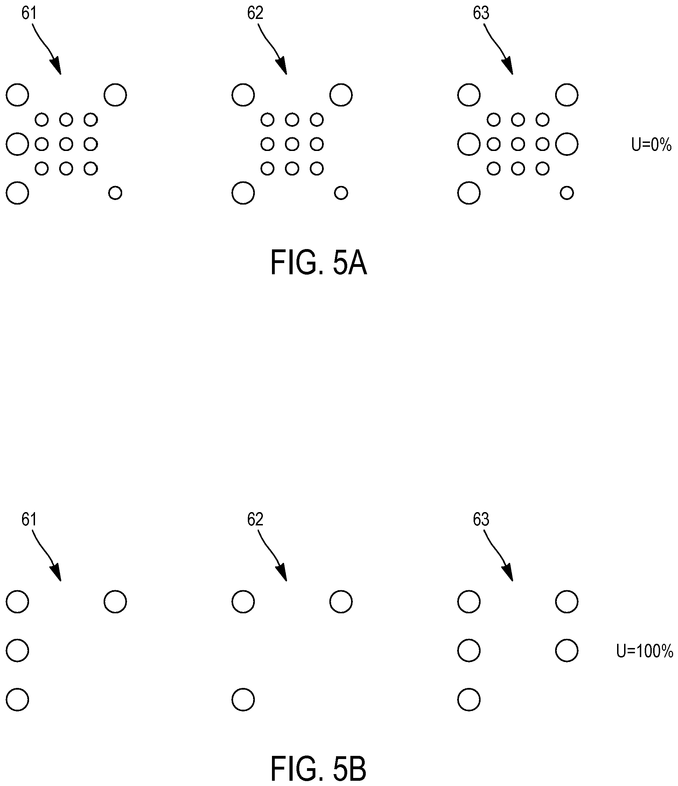

La figure 5A représente, pour un pneumatique neuf à taux d'usure nul, trois indicateurs d'usure (61, 62, 63) respectivement positionnés dans la nervure circonférentielle médiane 42 et les nervures circonférentielles d'épaule (41, 43), les dites nervures circonférentielles n'étant pas représentées sur la figure 5A. L'indicateur d'usure 61 d'une première nervure circonférentielle d'épaule comprend N1=10 cavités d'usure et N2=4 cavités de positionnement. L'indicateur d'usure 62 d'une nervure circonférentielle médiane comprend N1=10 cavités d'usure et N2=3 cavités de positionnement. L'indicateur d'usure 63 d'une deuxième nervure circonférentielle d'épaule comprend N1=10 cavités d'usure et N2=5 cavités de positionnement. Les trois indicateurs d'usure (61, 62, 63) ont le même nombre N1 de cavités d'usure et des nombres N2 de cavités de positionnement différents, permettant de les différencier entre eux et d'identifier leur appartenance à une nervure circonférentielle donnée.

De façon analogue, la figure 5B représente, pour un pneumatique totalement usé avec un taux d'usure égal à 100%, trois indicateurs d'usure (61, 62, 63) respectivement positionnés dans la nervure circonférentielle médiane 42 et les nervures circonférentielles d'épaule (41, 43), les dites nervures circonférentielles n'étant pas représentées sur la figure 5B. Seules les N2 cavités de positionnement respectives de chacun des trois indicateurs d'usure sont apparentes, avec N2=4 pour la première nervure circonférentielle d'épaule, N2=3 pour la nervure circonférentielle médiane et N2 =5 pour la deuxième nervure circonférentielle d'épaule.

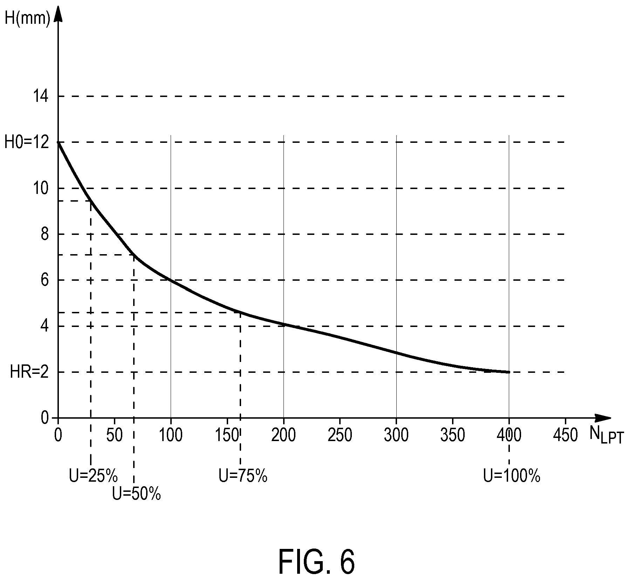

Enfin, la figure 6 présente la variation de la hauteur H d'une nervure circonférentielle en fonction du nombre d'atterrissages réalisés N_{LPT} (LPT signifiant « Landings Per Tread »). Dans l'exemple présenté, la hauteur H de la nervure circonférentielle varie d'une valeur initiale égale à 12 mm, pour un pneumatique neuf à taux d'usure nul, lorsqu'aucun atterrissage n'a encore été réalisé, jusqu'à une valeur résiduelle admissible HR égale à 2 mm, pour un pneumatique totalement usé avec un taux d'usure égal à 100%, après 400 atterrissages. L'évolution de la hauteur H en fonction du nombre d'atterrissages réalisés N_{LPT} n'est pas linéaire. Ainsi, des taux d'usure U égaux à 25%, 50% et 75% correspondent respectivement, dans le cas présent, à 30, 65 et 160 atterrissages. En pratique, pour un pneumatique donné, monté sur un avion donné, la courbe d'évolution de la hauteur H d'une nervure circonférentielle donnée en fonction du nombre d'atterrissages réalisés N_{LPT}, ou courbe d'usure, est déterminée lors du premier cycle de vie du pneumatique, allant du pneumatique neuf au pneumatique totalement usé, grâce à des indicateurs d'usure positionnés dans ladite nervure circonférentielle. Cette courbe d'usure ainsi déterminée, pour une nervure circonférentielle d'un pneumatique donné sur un avion donné, peut être utilisée pour prédire le potentiel d'usure restant du pneumatique à chaque observation du pneumatique. Ceci permet de définir à quel moment le remplacement du pneumatique sera nécessaire et de prévoir les opérations de maintenance afin de réduire le temps d'immobilisation de l'avion. Par ailleurs, le constat que, le cas échéant, l'usure de la nervure circonférentielle d'un pneumatique ne suit pas cette courbe d'usure, peut révéler un fonctionnement anormal du pneumatique, par exemple une usure irrégulière, et déclencher une action de maintenance préventive. De même la comparaison des courbes d'usure de pneumatiques équipant plusieurs avions d'une même flotte permet, en cas de divergence desdites courbes d'usure, d'identifier le ou les avions sur lesquels des vérifications et d'éventuels réglages devraient être effectués.

L'invention a été plus particulièrement étudiée dans le cas d'un pneumatique d'avion de dimension 46x17R20, destiné à équiper le train d'atterrissage principal d'un avion de ligne. Pour un tel pneumatique, la pression de gonflage est 15,3 bars, la charge statique 21 tonnes et la vitesse maximale 360 km/h.

Dans l'exemple étudié, trois nervures circonférentielles, dont une nervure circonférentielle médiane et deux nervures circonférentielles d'épaule, comprennent chacune six indicateurs d'usure équidistants selon la circonférence du pneumatique, c'est-à-dire répartis tous les 60°. Tout indicateur d'usure d'une première nervure circonférentielle d'épaule, correspondant à la nervure circonférentielle la plus extérieure, lorsque le pneumatique est monté sur le train d'atterrissage, est un motif de 14 cavités cylindriques, constituées de 10 cavités d'usure, dont 9 positionnées au centre et une en périphérie du motif, et de 4 cavités de positionnement, positionnées en périphérie du motif. Tout indicateur d'usure de la nervure circonférentielle médiane, axialement au centre de la bande de roulement, est un motif de 13 cavités cylindriques, constituées de 10 cavités d'usure, dont 9 positionnées au centre et une en périphérie du motif, et de 3 cavités de positionnement, positionnées en périphérie du motif. Tout indicateur d'usure d'une deuxième nervure circonférentielle d'épaule, correspondant à la nervure circonférentielle la plus intérieure, lorsque le pneumatique est monté sur le train d'atterrissage, est un motif de 15 cavités cylindriques, constituées de 10 cavités d'usure, dont 9 positionnées au centre et une en périphérie du motif, et de 5 cavités de positionnement, positionnées en périphérie du motif. Pour chacun des trois types d'indicateurs d'usure précédemment décrits, dont les nombres N1 de cavités d'usure sont tous identiques, les N1=10 cavités d'usure C1ᵢ, i variant de 1 à 10, ont des profondeurs P1ᵢ respectivement égales à i^{∗}(H0-HR), correspondant à des taux d'usure variant entre 10% et 100% par pas de 10%. Elles ont en outre des surfaces débouchantes circulaires de diamètre égal à 2 mm. Pour chacun des trois types d'indicateurs d'usure précédemment décrits, dont les nombres de cavités de positionnement N2 sont différents entre eux, N2 variant entre 3 et 5, les N2 cavités de positionnement C2ⱼ, j variant de 1 à N2, ont des profondeurs P2ⱼ toutes égales à 1.2^{∗}(H0-HR), correspondant à un taux d'usure égal à 120%. Elles ont en outre des surfaces débouchantes circulaires de diamètre égal à 4 mm. Cette configuration correspond aux indicateurs d'usure décrits dans les figures 5A et 5B.

## Revendications

1. Pneumatique (1) pour avion comprenant une bande de roulement (2), destinée à venir en contact avec un sol par l'intermédiaire d'une surface de roulement (3):
- la bande de roulement (2) comprenant au moins trois nervures circonférentielles (4) axialement séparées les unes des autres par au moins un sillon circonférentiel (5),
- au moins une nervure circonférentielle (4) ayant une hauteur initiale H0, mesurée sur le pneumatique à l'état neuf, et étant destinée à être usée jusqu'à une hauteur résiduelle admissible HR,
- la au moins une nervure circonférentielle (4) comprenant au moins un indicateur d'usure (6),
- l'indicateur d'usure (6) comprenant N cavités cylindriques (7) débouchant sur la surface de roulement (3) et indépendantes les unes par rapport aux autres,
**caractérisé en ce que** les N cavités (7) de l'indicateur d'usure (6) sont réparties en une première famille de N1 cavités d'usure C1ᵢ (8) ayant des profondeurs initiales P1ᵢ respectives deux à deux distinctes et égales à i^{∗}(H0-HR)/N1, i étant un nombre entier variant de 1 à N1, et en une deuxième famille de N2 cavités de positionnement C2ⱼ (9), j étant un nombre entier variant de 1 à N2, chaque cavité de positionnement C2j ayant une profondeur initiale P2ⱼ strictement supérieure à (HO-HR), de telle sorte que seules les N2 cavités de positionnement C2ⱼ (9) débouchent sur la surface de roulement (3) lorsque la hauteur résiduelle admissible HR de la nervure circonférentielle (4) est atteinte.

2. Pneumatique (1) pour avion selon la revendication 1 **dans lequel** le nombre N1 de cavités d'usure C1ᵢ (8) est au moins égal à 1 et au plus égal à 10.

3. Pneumatique (1) pour avion selon l'une des revendications 1 ou 2 **dans lequel** le nombre N2 de cavités de positionnement C2ⱼ (9) est au moins égal à 1 et au plus égal à 5.

4. Pneumatique (1) pour avion selon l'une quelconque des revendications 1 à 3 **dans lequel** toute cavité (7) a, sur la surface de roulement (3), une surface débouchante inscrite dans un cercle de diamètre D au moins égal à 2 mm et au plus égal à 10 mm.

5. Pneumatique (1) pour avion selon l'une quelconque des revendications 1 à 4 **dans lequel** toutes les cavités d'usure C1ᵢ (8) ont, sur la surface de roulement (3), une surface débouchante inscrite dans un cercle de diamètre D1 identique.

6. Pneumatique (1) pour avion selon l'une quelconque des revendications 1 à 5 **dans lequel** toutes les cavités de positionnement C2ⱼ (9) ont, sur la surface de roulement (3), une surface débouchante inscrite dans un cercle de diamètre D2 identique.

7. Pneumatique (1) pour avion selon l'une quelconque des revendications 1 à 6 **dans lequel** la bande de roulement (2) comprend deux nervures circonférentielles d'épaule (41, 43) et une nervure circonférentielle médiane (42), comprenant chacune au moins un indicateur d'usure (61, 62, 63) ayant le même nombre N1 de cavités d'usure C1ᵢ et un nombre N2 de cavités de positionnement C2ⱼ différent, de telle sorte que le nombre total N=N1+N2 de cavités est différent pour chacune des deux nervures circonférentielles d'épaule (41, 43) et la nervure circonférentielle médiane (42).

8. Pneumatique (1) pour avion selon l'une quelconque des revendications 1 à 7 **dans lequel** la bande de roulement (2) comprend deux nervures circonférentielles d'épaule (41, 43) et une nervure circonférentielle médiane (42), comprenant chacune au moins trois indicateurs d'usure (61, 62, 63), répartis sur la circonférence de la nervure circonférentielle, identiques entre eux pour chaque nervure circonférentielle, et ayant, d'une nervure circonférentielle à l'autre, le même nombre N1 de cavités d'usure C1ᵢ et un nombre N2 de cavités de positionnement C2ⱼ différent.

9. Pneumatique (1) pour avion selon l'une quelconque des revendications 7 ou 8 **dans lequel** les au moins un indicateur d'usure (61, 62, 63) respectifs des deux nervures circonférentielles d'épaule (41, 43) et de la nervure circonférentielle médiane (42) sont positionnés circonférentiellement, les uns par aux autres, dans un secteur angulaire circonférentiel au plus égal à 20°.

## Patentansprüche

1. Flugzeugreifen (1) umfassend einen Laufstreifen (2), der dazu bestimmt ist, über eine Lauffläche (3) mit einem Boden in Kontakt zu treten:
- der Laufstreifen (2) umfassend mindestens drei Umfangsrippen (4), die durch mindestens eine Umfangsfurche (5) axial voneinander getrennt sind,
- mindestens ein Umfangsrippe (4) aufweisend eine Anfangshöhe H0, die an dem Reifen im Neuzustand gemessen wird, und die dazu bestimmt ist, bis zu einer zulässigen Resthöhe HR abgenutzt zu werden,
- die mindestens eine Umfangsrippe (4) umfassend mindestens einen Abnutzungsanzeiger (6),
- der Abnutzungsanzeiger (6) umfassend N zylindrische Hohlräume (7), die in der Lauffläche (3) münden und bezogen aufeinander unabhängig sind,
**dadurch gekennzeichnet, dass** die N Hohlräume (7) des Abnutzungsanzeigers (6) in eine erste Familie aus N1 Abnutzungshohlräumen C1ᵢ (8) mit jeweiligen Anfangstiefen P1ᵢ, die paarweise gesondert und gleich i^{∗}(H0-HR)/N1 sind, wobei i eine Ganzzahl ist, die von 1 bis N1 variiert, und in eine zweite Familie aus N2 Positionierungshohlräumen C2ⱼ (9) aufgeteilt sind, wobei j eine Ganzzahl ist, die von 1 bis N2 variiert, jeder Positionierungshohlraum C2ⱼ aufweisend eine Anfangstiefe P2ⱼ, die streng größer als (H0-HR) ist, so dass nur die N2 Positionierungshohlräume C2ⱼ (9) in der Lauffläche (3) münden, wenn die zulässige Resthöhe HR der Umfangsrippe (4) erreicht ist.

2. Flugzeugreifen (1) nach Anspruch 1, wobei die Anzahl N1 von Abnutzungshohlräumen C1ᵢ (8) mindestens gleich 1 und höchstens gleich 10 ist.

3. Flugzeugreifen (1) nach einem der Ansprüche 1 oder 2, wobei die Anzahl N2 von Positionierungshohlräumen C2ⱼ (9) mindestens gleich 1 und höchstens gleich 5 ist.

4. Flugzeugreifen (1) nach einem der Ansprüche 1 bis 3, wobei jeder Hohlraum (7) auf der Lauffläche (3) eine Mündungsfläche aufweist, die in einem Kreis mit dem Durchmesser D mindestens gleich 2 mm und höchstens gleich 10 mm liegt.

5. Flugzeugreifen (1) nach einem der Ansprüche 1 bis 4, wobei alle Abnutzungshohlräume C1ᵢ (8) auf der Lauffläche (3) eine Mündungsfläche aufweisen, die in einem Kreis mit identischem Durchmesser D1 liegt.

6. Flugzeugreifen (1) nach einem der Ansprüche 1 bis 5, wobei alle Positionierungshohlräume C2ⱼ (9) auf der Lauffläche (3) eine Mündungsfläche aufweisen, die in einem Kreis mit identischem Durchmesser D2 liegt.

7. Flugzeugreifen (1) nach einem der Ansprüche 1 bis 6, wobei der Laufstreifen (2) zwei Schulter-Umfangsrippen (41, 43) und eine Mittel-Umfangsrippe (42) umfasst, jeweils umfassend mindestens einen Abnutzungsanzeiger (61, 62, 63) mit derselben Anzahl N1 von Abnutzungshohlräumen C1ᵢ und einer verschiedenen Anzahl N2 von Positionierungshohlräumen C2ⱼ, so dass die Gesamtzahl N=N1+N2 von Hohlräumen für jede der zwei Schulter-Umfangsrippen (41, 43) und der Mittel-Umfangsrippe (42) verschieden ist.

8. Flugzeugreifen (1) nach einem der Ansprüche 1 bis 7, wobei der Laufstreifen (2) zwei Schulter-Umfangsrippen (41, 43) und eine Mittel-Umfangsrippe (42) umfasst, jeweils umfassend mindestens drei Abnutzungsanzeiger (61, 62, 63), die über den Umfang der Umfangsrippe verteilt sind, die für jede Umfangsrippe zueinander identisch sind und von einer Umfangsrippe zur anderen dieselbe Anzahl N1 von Abnutzungshohlräumen C1ᵢ und eine verschiedene Anzahl N2 von Positionierungshohlräumen C2ⱼ aufweisen.

9. Flugzeugreifen (1) nach einem der Ansprüche 7 oder 8, wobei der jeweilige mindestens eine Abnutzungsanzeiger (61, 62, 63) der zwei Schulter-Umfangsrippen (41, 43) und der Mittel-Umfangsrippe (42) in Umfangsrichtung in einem Umfangs-Winkelabschnitt von höchstens gleich 20° einander positioniert sind.

## Claims

1. Tyre (1) for an aeroplane comprising a tread (2), intended to come into contact with the ground via a rolling surface (3):
- the tread (2) comprising at least three circumferential ridges (4) axially separated from one another by at least one circumferential groove (5),
- at least one circumferential ridge (4) having an initial height H0, measured on the tyre in the new state, and being intended to be worn to an allowable remaining height HR,
- the at least one circumferential ridge (4) comprising at least one wear indicator (6),
- the wear indicator (6) comprising N cylindrical cavities (7) emerging on the rolling surface (3) and independent of one another,
**characterized in that** the N cavities (7) of the wear indicator (6) are divided up into a first family of N1 wear cavities C1ᵢ (8) having respective initial depths P1ᵢ in pairs that are distinct and equal to i^{∗}(H0-HR)/N1, i being an integer number varying from 1 to N1, and into a second family of N2 positioning cavities C2ⱼ (9), j being an integer number varying from 1 to N2, each positioning cavity C2j having an initial depth P2ⱼ strictly greater than (HO-HR), such that only the N2 positioning cavities C2ⱼ (9) emerge on the rolling surface (3) when the allowable remaining height HR of the circumferential ridge (4) is reached.

2. Tyre (1) for an aeroplane according to Claim 1 **wherein** the number N1 of wear cavities C1ᵢ (8) is at least equal to 1 and at most equal to 10.

3. Tyre (1) for an aeroplane according to either of Claims 1 and 2, **wherein** the number N2 of positioning cavities C2ⱼ (9) is at least equal to 1 and at most equal to 5.

4. Tyre (1) for an aeroplane according any one of Claims 1 to 3 **wherein** any cavity (7) has, on the rolling surface (3), an emerging surface inscribed in a circle of diameter D at least equal to 2 mm and at most equal to 10 mm.

5. Tyre (1) for an aeroplane according to any one of Claims 1 to 4 **wherein** all the wear cavities C1ᵢ (8) have, on the rolling surface (3), an emerging surface inscribed in a circle of identical diameter D1.

6. Tyre (1) for an aeroplane according to any one of Claims 1 to 5 **wherein** all the positioning cavities C2ⱼ (9) have, on the rolling surface (3), an emerging surface inscribed in a circle of identical diameter D2.

7. Tyre (1) for an aeroplane according to any one of Claims 1 to 6 **wherein** the tread (2) comprises two shoulder circumferential ridges (41, 43) and one median circumferential ridge (42), each comprising at least one wear indicator (61, 62, 63) having the same number N1 of wear cavities C1ᵢ and a different number N2 of positioning cavities C2ⱼ, such that the total number N=N1+N2 of cavities is different for each of the two shoulder circumferential ridges (41, 43) and the median circumferential ridge (42).

8. Tyre (1) for an aeroplane according to any one of Claims 1 to 7 **wherein** the tread (2) comprises two shoulder circumferential ridges (41, 43) and one median circumferential ridge (42), each comprising at least three wear indicators (61, 62, 63), distributed over the circumference of the circumferential ridge, identical to one another for each circumferential ridge, and having, from one circumferential ridge to the other, the same number N1 of wear cavities C1ᵢ and a different number N2 of positioning cavities C2ⱼ.

9. Tyre (1) for an aeroplane according to either one of Claims 7 and 8 **wherein** the respective at least one wear indicator (61, 62, 63) of the two shoulder circumferential ridges (41, 43) and of the median circumferential ridge (42) are positioned circumferentially relative to one another in a circumferential angular sector at most equal to 20°.
